(19)

Europäisches
Patentamt
European
Patent Office
Office européen
des brevets

(11)  EP 2 641 390 B1

(12)  **EUROPEAN PATENT SPECIFICATION**

(45) Date of publication and mention
of the grant of the patent:
**08.11.2017 Bulletin 2017/45**

(21) Application number: **11799339.4**

(22) Date of filing: **15.11.2011**

(51) Int Cl.:
**H04N 5/14** $^{(2006.01)}$

(86) International application number:
**PCT/US2011/060756**

(87) International publication number:
**WO 2012/068085 (24.05.2012 Gazette 2012/21)**

(54) **COMPONENT FILTERING FOR LOW-LIGHT NOISE REDUCTION**

KOMPONENTENFILTERUNG FÜR NIEDRIGLICHT-RAUSCHVERMINDERUNG

FILTRAGE DE COMPOSANTES PERMETTANT UNE RÉDUCTION DE BRUIT EN CAS DE FAIBLE
NIVEAU DE LUMIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.11.2010 US 950664
19.11.2010 US 950671
19.11.2010 US 950666**

(43) Date of publication of application:
**25.09.2013 Bulletin 2013/39**

(73) Proprietor: **Analog Devices, Inc.
Norwood, MA 02062-9106 (US)**

(72) Inventors:
• **SINGH, Raka
Bangalore 560 016 (IN)**
• **MALIK, Gaurav
Bangalore 560 075 (IN)**

• **MAHAPATRA, Rajesh
Bangalore 560 017 (IN)**

(74) Representative: **Mears, Andrew David
Withers & Rogers LLP
4 More London Riverside
London SE1 2AU (GB)**

(56) References cited:
**US-A1- 2006 023 794      US-A1- 2009 016 603
US-A1- 2009 278 961      US-A1- 2010 020 208**

• **RAJESH JHA ET AL: "EDGE ADAPTIVE
FILTERING: HOW MUCH AND WHICH
DIRECTION?", PROCEEDINGS OF THE
INTERNATIONAL CONFERENCE ON SYSTEMS,
MAN AND CYBERNETICS. CAMBRIDGE, MA.,
NOV. 14 - 17, 1989; [PROCEEDINGS OF THE
INTERNATIONAL CONFERENCE ON SYSTEMS,
MAN AND CYBERNETICS], NEW YORK, IEEE, US,
vol. 1 OF 03, 14 November 1989 (1989-11-14),
pages 364-366, XP000129805,**

**Description**

RELATED APPLICATIONS

This application claims priority to U.S. Patent Application Serial No. 12/950,664, filed on November 19, 2010; U.S. Patent Application Serial No. 12/950,666, filed on November 19, 2010 and U.S. Patent Application Serial No. 12/950,671, filed on November 19, 2010, the entire disclosures of which are incorporated by reference herein.

TECHNICAL FIELD

Embodiments of the invention generally relate to video signal processing, and in particular to processing video signals to remove artifacts caused by low-light noise.

BACKGROUND

Low-light images are especially susceptible to corruption from noise caused by light-detecting sensors (i.e., low-light artifacts). For example, a video or still camera may capture undesirable grains or discolorations in low-light conditions. This noise may lead to uncorrelated pixels and, as a result, reduced compression efficiency for video coding algorithms (e.g., MPEG4 and H.264). Many applications, such as security cameras, capture low-light images and require a large amount of storage space for retaining those images, and any decrease in the required storage space may lead to a more cost-effective application, an increase in the number of images or frames of video stored, or reduced network traffic for transporting the images. Thus, efforts have been made to detect and eliminate low-light noise.

Previous efforts (such as transform-domain methods, DCT, wavelet, or other statistical methods), however, suffer from drawback. These methods are computationally intensive and require a significant amount of computing resources, which may not be available on low-power, portable, or other devices. Furthermore, these methods are not adjustable based on available resources or the complexity of the source image, further wasting resources on simple images or during high-load conditions in which the additional resources may not be necessary or available.

US 2009/0278961 A1 describes a system and method for filtering video noise, in which chrominance noise and luminance noise are separated and predetermined filter criteria are applied to the chrominance noise, after which luminance noise is filtered based on the filter criteria of the filter applied to the chrominance noise.

SUMMARY

According to a first aspect of the invention, there is provided a system according to claim 1.

According to a second aspect of the invention, there is provided a method according to claim 8.

In general, various aspects of the systems and methods described herein use a Gaussian distribution and correlation technique to remove uncorrected low-light noise from images taken from video or still cameras. The images may be split into luma and chroma components and filtered separately. Different filters may be used depending on the complexity of the images and the resources available. The filters may adapt to variations in the image by using edge-detection and dilation filters, thereby preserving high-frequency details at feature edges. Furthermore, the image may be divided into a plurality of sections, filtered separately, and re-combined.

In general, in one aspect, a system for removing noise from a low-light image includes a luma filter circuit, a chroma filter circuit, and a summing circuit. The luma filter circuit creates a filtered luma component by applying a first filter to a luma component of a low-light image, and the chroma filter circuit creates a filtered chroma component by applying a second filter to a chroma component of the low-light image. The summing circuit combines the filtered luma component and the filtered chroma component to thereby produce a filtered low-light image.

In various embodiments, the luma filter circuit selects the first filter from a plurality of available filters, and the selection may be based at least in part on a computational cost of each of the plurality of available filters and/or a complexity of the luma component. The first filter may be a low-pass averaging filter, a median filter, and/or an edge-detection-based adaptive filter; the second filter may be a low-pass averaging filter and/or a temporal-averaging filter. The image may be a static image and/or a video frame.

In general, in another aspect, a method for removing noise from a low-light image includes creating a filtered luma component by applying a first filter to a luma component of a low-light image. A filtered chroma component is created by applying a second filter to a chroma component of the low-light image. The filtered luma and chroma components are combined to produce a filtered low-light image.

In various embodiments, the first filter is selected from a plurality of available filters. The selection of the first filter may be based at least in part on a computational cost of each of the plurality of available filters and/or a complexity of the luma component. The first filter may be a low-pass averaging filter, a median filter, and/or an edge-detection-based adaptive filter; the second filter may be a low-pass averaging filter and/or a temporal-averaging filter. The image may be a static image and/or a video frame.

In general, in another aspect, an adaptive filter for filtering noise from a low-light image includes a morphology filter and a comparative filter. The morphology filter divides the image into a non-edge region and a dilated edge region by dilating an edge detected in the image. The comparative filter compares a pixel in the non-edge region to a region surrounding the pixel and optionally replaces the pixel, based on a result of the comparison, with a new pixel derived at least in part from the region surrounding the pixel.

In various embodiments, a difference filter detects the edge in the image and/or the morphology filter comprises a dilation filter. The dilation filter may be a $3\times4$ dilation filter, and the region surrounding the pixel may correspond to a $3\times3$ pixel region. The adaptive filter may compare a difference between the pixel and a mean of the region surrounding the pixel to a variance of the region surrounding the pixel. The variance may be a variance of a Gaussian distribution of the region surrounding the pixel; a circuit may be included to compute the variance of the Gaussian distribution of the region surrounding the pixel. The mean may be a mean of a Gaussian distribution of the region surrounding the pixel; a circuit may be included to compute the mean of the Gaussian distribution of the region surrounding the pixel.

The comparative filter may derive the new pixel based at least in part on a median value of the region surrounding the pixel and/or a low-pass filter value of the region surrounding the pixel. The comparative filter may replace a second pixel adjacent to the pixel with the new pixel; the pixel may be an even pixel and the second pixel may be an odd pixel. Alternatively, the comparative filter may preserve the pixel.

In general, in another aspect, a method for adaptively filtering noise from a low-light image includes dilating an edge detected in an image to divide the image into a non-edge region and a dilated edge region. A pixel in the non-edge region is compared to a region surrounding the pixel. The pixel is optionally replaced, based on a result of the comparison, with a new pixel derived at least in part from the region surrounding the pixel.

In various embodiments, the edge may be detected in the image. Comparing the pixel to the region surrounding the pixel may include comparing a difference between the pixel and a variance of the region surrounding the pixel to a mean of the region surrounding the pixel. The variance may be a variance of a Gaussian distribution of the region surrounding the pixel, and the mean may be a mean of a Gaussian distribution of the region surrounding the pixel. The new pixel may be derived based at least in part on a median value of the region surrounding the pixel and/or a low-pass filter value of the region surrounding the pixel. A second pixel, adjacent to the pixel, may be replaced with the new pixel; the pixel may be an even pixel and the second pixel may be an odd pixel. Alternatively, the comparative filter may preserve the pixel.

In general, in one aspect, a system for removing noise from a low-light image includes a division circuit, a filter circuit, and a recombination circuit. The division circuit divides the image into a plurality of image regions. The filter circuit creates a plurality of filtered image regions by applying a first filter to luma components of each of the plurality of image regions. The recombination circuit combines the plurality of filtered image regions into a filtered image.

In various embodiments, the filter circuit applies the first filter to one image region at a time. Alternatively, the filter circuit may apply the first filter to more than one image region at a time. The image region may include a square tile, rectangular tile, row, or column. The first filter may be a low-pass averaging filter, median filter, and/or adaptive filter; the adaptive filter may include a morphology filter and/or a comparative filter. A second filter may filter a chroma component of each of the plurality of image regions, and the recombination circuit may combine the filtered luma component of each image region with a corresponding filtered chroma component of each image region. The recombination circuit may store history information related to an image block, image row, and/or image column.

In general, in another aspect, a method removes noise from a low-light image. The image is divided into a plurality of image regions. A first filter, applied to luma components of each of the plurality of image regions, creates a plurality of filtered image regions. The plurality of filtered image regions is combined into a filtered image.

In various embodiments, the first filter is applied to each image region in series. Alternatively, the first filter may be applied to the plurality of image regions in parallel. Applying the first filter may include filtering the image region, median filtering the image region, and/or adaptively filtering the image region (which may include comparing a pixel against neighboring pixels and optionally replacing the pixel). A chroma component of each of the plurality of image regions may be filtered. A filtered luma component of each image region may be combined with a corresponding filtered chroma component of each image region. History information related to an image block, image row, and/or image column may be stored.

These and other objects, along with advantages and features of the present invention herein disclosed, will become more apparent through reference to the following description, the accompanying drawings, and the claims. Furthermore, it is to be understood that the features of the various embodiments described herein are not mutually exclusive and may exist in various combinations and permutations.

BRIEF DESCRIPTION OF THE DRAWINGS

In the drawings, like reference characters generally refer to the same parts throughout the different views. In the following description, various embodiments of the present invention are described with reference to the following drawings, in which:

FIG. 1 is a block diagram of a system for removing noise from a low-light image in accordance with an embodiment of the invention;

FIG. 2 is a flowchart illustrating a method for removing noise from a low-light image in accordance with an embodiment of the invention;

FIG. 3 is a block diagram of an adaptive filter in accordance with an embodiment of the invention;

FIG. 4 is an example of a low-light image component in accordance with an embodiment of the invention;

FIG. 5 is a flowchart illustrating a method for adaptively filtering noise from a low-light image in accordance with an embodiment of the invention;

FIG. 6 is a block diagram of a system for dividing an image to remove low-light noise therefrom in accordance with an embodiment of the invention; and

FIG. 7 is a flowchart illustrating a method for dividing an image to remove low-light noise therefrom in accordance with an embodiment of the invention.

DETAILED DESCRIPTION

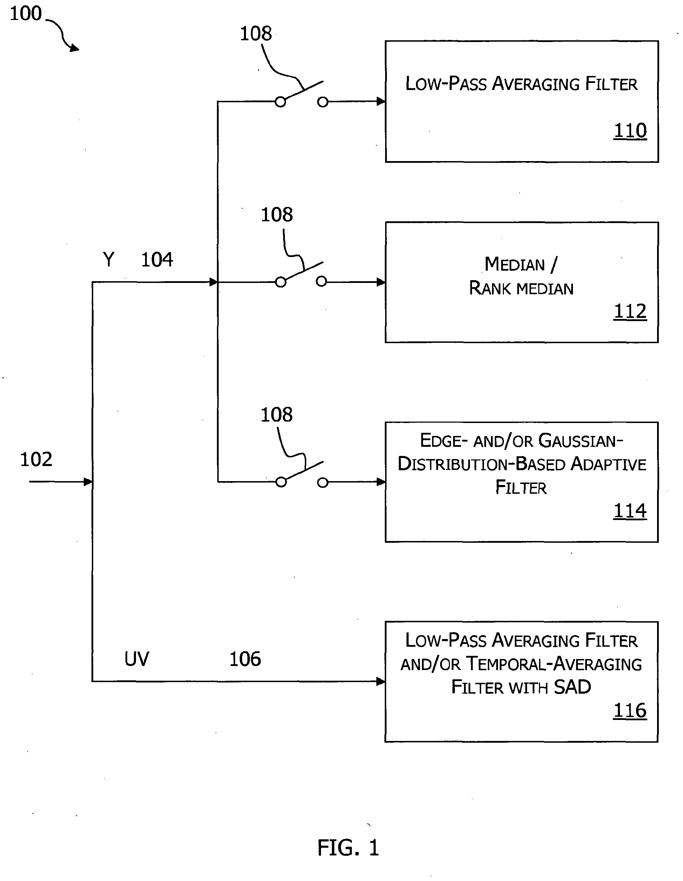

FIG. 1 illustrates a system 100 for removing noise from a low-light image. As one of skill in the art will understand, a source image 102 may be separated into a brightness component 104 and a color component 106. The brightness component 104 may also be known as a Y or luma component; the color component 106 may also be known as a UV or chroma component. In one embodiment, the brightness component 104 and color component 106 are filtered separately using different filters. Once the brightness component 104 and color component 106 are filtered, they may be combined to re-create a filtered version of the original image 102 or further processed as separate components.

A network of switches 108 selects one of three filters 110, 112, 114 for the brightness component 104 of the image 102. The system 100 may include any number of brightness-component filters, however, including a single filter, and the current invention is not limited to any particular number or type of filter. In one embodiment, a low-pass averaging filter 110 may be selected by the switches 108 if the source image 102 is simple, if only a small degree of filtering is required, and/or if system resources are limited. The low-pass averaging filter 110 attenuates high-frequency signals in the brightness component 104, while allowing low-frequency signals to pass. In one embodiment, the low-pass averaging filter 110 performs a blur function on the brightness component 104.

A median filter 112 may be used to filter the brightness component 104 for images of medium complexity, if a medium amount of filtering is desired, and/or if an average amount of system resources is available. As one of skill in the art will understand, the median filter 112 processes the brightness component 104 pixel by pixel and replaces each pixel with the median of it and surrounding pixels. For example, the median filter 112 may consider a $3 \times 3$ window of pixels surrounding a pixel of interest (i.e., nine total pixels). The median filter 112 sorts the nine pixels by their brightness values, selects the value in the middle (i.e., fifth) position, and replaces the pixel of interest with the selected value. In one embodiment, the filter 112 is a rank or rank-median filter, and may select a pixel in any position in the sorted list of pixels (e.g., the third or sixth position). In one embodiment, if the absolute difference between the selected value and the original value is larger than the threshold, the original value is kept; if the difference is smaller than or equal to the threshold, the ranked value is assigned.

An adaptive filter 114 may be used to filter the brightness component 104 for images of high complexity, if a large amount of filtering is desired, and/or if a large amount of system resources is available. The adaptive filter 114 selects a filtering technique based on the dynamically determined characteristics of the brightness component 104, as explained in greater detail below.

A low-pass averaging filter 116 (e.g., a $5 \times 5$ low-pass averaging filter) may be used to filter the color component 106. In one embodiment, the color component 106 is less complex than the brightness component and/or is less affected by low-light noise and thus requires less filtering. The filter 116 may be a temporal-averaging filter with sum-of-absolute-differences or any other type of similar filter. The system 100 may include more than one color-component filter 116, and one of the plurality of color-component filters 116 may be selected based on the complexity of the color component 106, the availability of system resources, and/or a desired level of filtering quality.

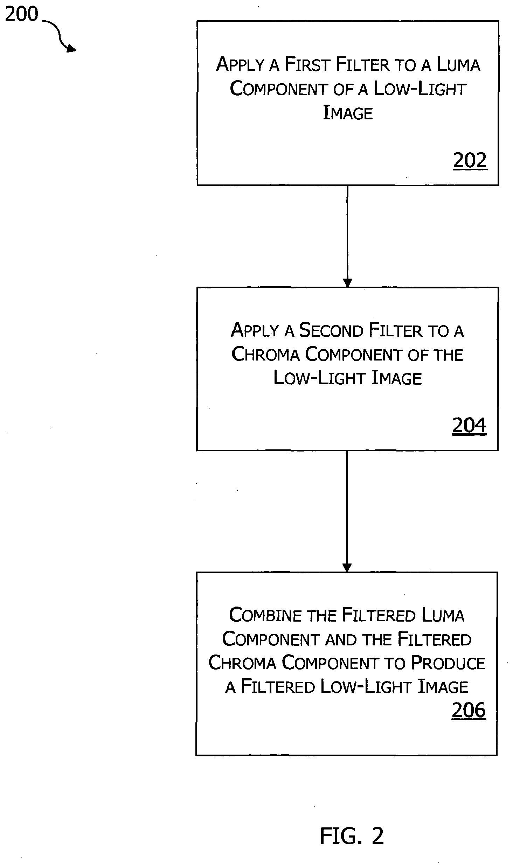

FIG. 2 illustrates a flowchart 200 for removing noise from a low-light image. A first filter is applied to a luma component of a low-light image (Step 202) and a second filter is applied to a chroma component of the low-light image (Step 204). The filtered luma component is combined with the filtered chroma component to produce a filtered low-light image (Step 206). The first filter may be the low-pass averaging filter 110, median/rank-median filter 112, or the edge/Gaussian-distribution-based adaptive filter 114, as described above, and the second filter may be the low-pass or temporal-averaging filter 116.

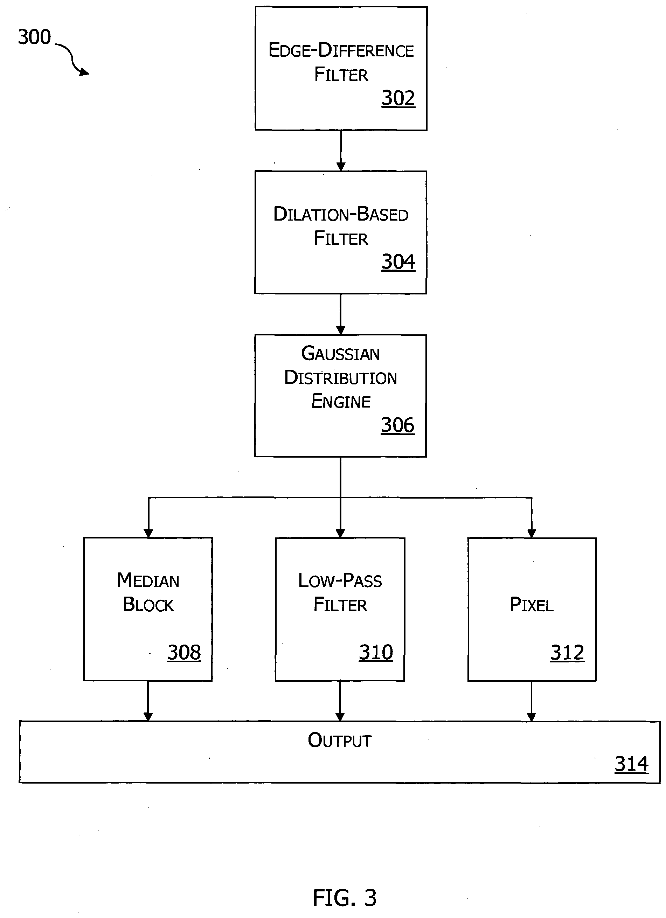

FIG. 3 is an illustration of one implementation 300 of the adaptive filter 114. An edge-difference filter 302 detects edges in a luma component 104 of an image 102. The edge-difference filter 302 may also be known as a difference filter. The edge-difference filter 302 may detect edges in the luma component 104 while retaining high-frequency details therein. The edge-detection process divides the pixels in the luma component into edge and non-edge pixels.

A dilation-based filter 304 modifies the output of the edge-difference filter 302 by distributing the results of the edge detection to neighboring pixels. The dilation-based filter may be modified to ease implementation on, for example, embedded and/or DSP platforms. For example, if four pixels in a row are dilated, the four pixels may be shifted, depending on the pixel location, to align with a word boundary. In various embodiments, the dilation-based filter 304 is a morphology filter, a 3×4 dilation filter, or a 4×3 dilation filter. The dilation-based filter 304 may expand, or dilate, regions of pixels designated as edge pixels to incorporate other, nearby pixels. For example, a pixel having an intensity different from its neighbors may be the result of low-light noise; but, if the location of the pixel is near a detected edge, the pixel may instead be the result of a real physical feature of the captured image. The dilation-based filter 304, by correlating such pixels occurring near detected edges to edge pixels, prevents their erroneous designation as noise-produced pixels.

Each non-edge pixel in the dilated luma component 104 is then analyzed against a neighboring region of pixels (e.g., a neighboring 3×3 block of pixels). Depending on the differences between the analyzed pixel and its neighbors, as computed by a Gaussian distribution engine 306, the pixel is assigned a new value according to assignment units 308-312 and output by an output unit 314.

In greater detail, the Gaussian distribution engine 306 computes a mean and a variance of the Gaussian distribution of the block or window surrounding the analyzed pixel. The deviation of the pixel from the mean of the block is computed and compared with the variance. If the difference between the pixel and the variance is much greater than the mean (e.g., greater than three times the standard deviation), the pixel is likely the result of low-light noise. In this case, the median block 308 replaces the pixel with the median of the block of pixels. If the difference between the pixel and the variance is near the mean, the low-pass filter 310 replaces the analyzed pixel with the result of low-pass filtering the block of pixels. If the difference between the pixel and the variance is less than the mean, the pixel block 213 passes the analyzed pixel to the output block 314 unchanged.

In general, the algorithm utilized by the assignment units 308-312 may be generalized by the following equations:

$$\textit{If \{(Analyzed Pixel)} - \textit{(Mean of Block of Pixels)\}} > N \times \textit{(Variance of Block of Pixels):}$$

$$\textit{Output} = \textit{Median of Block of Pixels} \qquad (1)$$

$$\textit{If \{(Analyzed Pixel)} - \textit{(Mean of Block of Pixels)\}} > M \times \textit{(Variance of Block of Pixels):}$$

$$\textit{Output} = \textit{Result of Low-Pass Filter of Block of Pixels} \qquad (2)$$

$$\textit{If \{(Analyzed Pixel)} - \textit{(Mean of Block of Pixels)\}} > P \times \textit{(Variance of Block of Pixels):}$$

$$\textit{Output} = \textit{Original Analyzed Pixel} \qquad (3)$$

wherein $P \leq M \leq N$. That is, the output 314 is assigned the median 308 for large differences, the low-pass filter 310 for medium differences, and the original pixel 312 for small differences. In one embodiment, the operations performed by the above equations (1)-(3) are executed by specially allocated hardware. In another embodiment, the median operation is performed by the median filter 112 and low-pass filtering is performed by the low-pass averaging filter 110, as shown in FIG. 1.

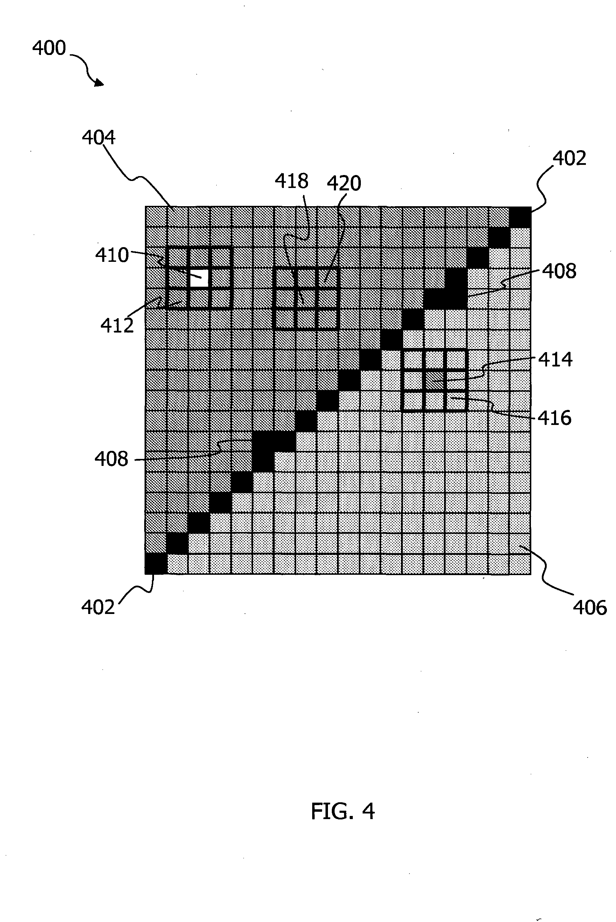

FIG. 4 illustrates an example luma component 400. An edge 402 is detected between image regions 404 and 406. As described above, pixels 408 near the edge 402 may be designated as edge pixels by the dilation-based filter 304. A first pixel 410 may be analyzed and compared to its $3\times3$ surrounding pixels 412. In this case, because the difference between the analyzed pixel 410 and the mean of the block of pixels 412 is much greater (i.e., greater than a threshold N) than the variance of the block of pixels 412 (i.e., there is a large discrepancy between the luma value of the pixel 410 and its neighbors 412), the pixel 410 is replaced with the median of the $3\times3$ surrounding pixels 412.

In another example, another pixel 414 is analyzed and compared to its surrounding pixels 416. Here, because the difference between the analyzed pixel 414 and the mean of the block of pixels 412 is less than the first threshold N but greater than a second threshold M when compared to the variance of the block of pixels 412, the pixel 414 is replaced with the result of low-pass filtering the block 416. Finally, because the difference between a third analyzed pixel 418 and the mean of its surrounding block of pixels 420 is much less than a threshold P when compared to the variance of the block of pixels 420, the pixel 418 remains unchanged.

In one embodiment, the above-described system 300 analyzes every pixel in the luma component 104. In other embodiments, the system 300 analyzes only a subset of the total pixels in the luma component 104. For example, the system 300 may analyze only even-numbered pixels (e.g., every second pixel) in the luma component 104. The result of analyzing an even-numbered pixel may be applied not only to that pixel itself, but also to a neighboring odd-numbered pixel (e.g., a pixel adjacent to the analyzed even-numbered pixel in the same row). Because the two pixels are neighbors, the result computed for one pixel is likely to be similar to the uncomputed result of the neighboring pixel, and applying the analyzed pixel's result to both pixels may produce only a small error. Other subsets of pixels may be chosen for analysis, such as odd pixels, every Nth pixel, diagonal pixels, or rows/columns of pixels. The analyzed pixels may constitute 50% of the total pixels, as in the example above, or any other percentage of total pixels.

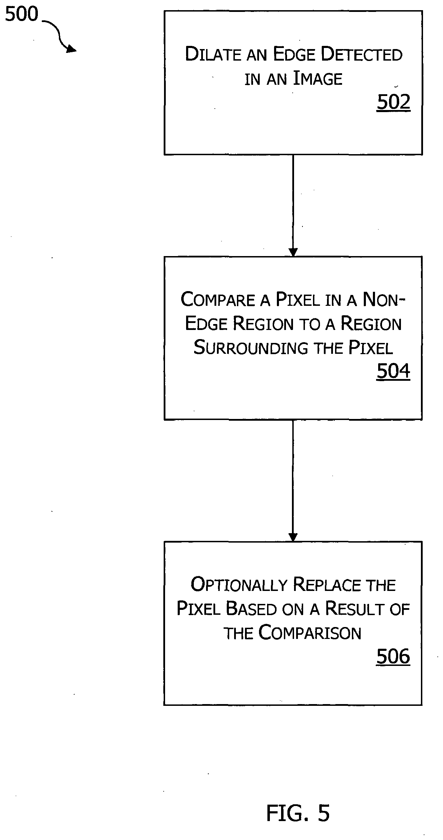

FIG. 5 is a flowchart 500 illustrating a method for adaptively filtering noise from a low-light image. An edge detected in the image is dilated (Step 502) using, e.g., the edge-difference filter 302 and dilation-based filter 304 described above. The edge-detection and dilation divides the image into edge and non-edge pixels, and pixels in the non-edge region are compared to regions surrounding the pixels (Step 504). Depending on the result of the comparison, as described above, the non-edge pixels are optionally replaced (Step 506).

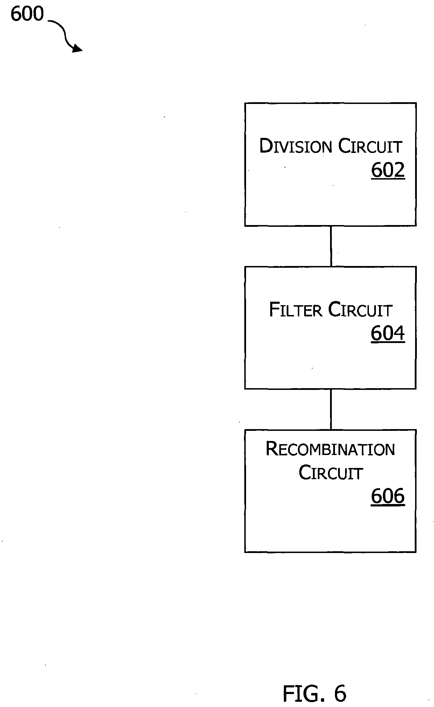

FIG. 6 is a block diagram 600 of a system for removing noise from a low-light image by dividing the image into sub-regions. A division circuit 602 divides the image into two or more regions, and a filter circuit 604 applies a first filter to luma components of each of the regions. Once each region has been filtered, a recombination circuit 606 combines each filtered region to create a filtered image. In general, the regions may be any $M\times N$ size, for example, $16\times16$ pixels.

In one embodiment, the system 600 may be used to divide an image into a number of regions that corresponds to a number of available filter circuits 604. Each filter circuit 604 may include a system 100, as illustrated in FIG. 1, for removing low-light noise from each region. The filter circuit 604 may include a first filter for filtering a luma component and a second filter for filtering a chroma component. The plurality of regions may then be filtered simultaneously in parallel, thereby reducing the time required to filter the entire image. In other embodiments, the number of regions is greater than the number of filter circuits 604, and some regions are processed in parallel while others are queued.

In another embodiment, only one filter circuit 604 is used to process each image region in series. In this embodiment, the size of the image region may be defined by an amount of memory or other storage space available and/or the capabilities of the filter circuit 604. The size of the region may be adjusted to consume more or fewer resources, depending on the constraints of a particular application. For example, an application having very limited memory may require a small region. History information for rows and columns of the regions or image may be stored and managed to ease data movement when switching and/or combining image regions.

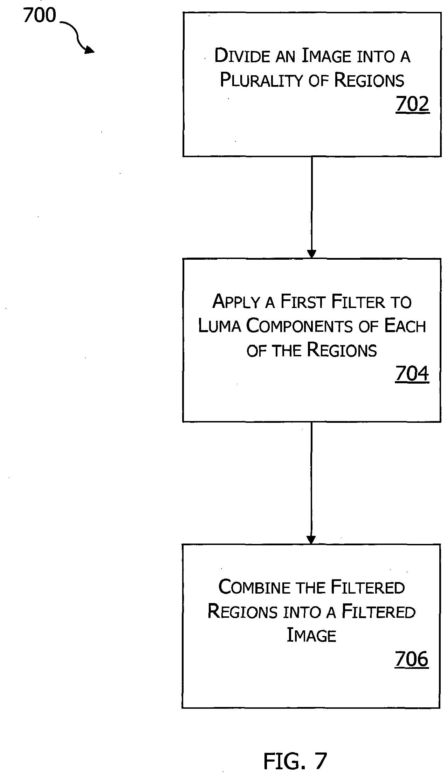

FIG. 7 illustrates a method 700 for removing noise from a low-light image by dividing the image into sub-regions. The image is divided into a plurality of regions (Step 702), and a first filter is applied (in series or in parallel) to luma components of each of the regions (Step 704). The separately filtered regions are combined into a filtered image (Step 706).

Applying the first filter may include low-pass filtering the region, median filtering the region, and/or adaptively filtering the region, as described above with reference to FIG. 1. The adaptive filter compares a pixel in the region to neighboring pixels and optionally replaces it. As also described above, a chroma component of the image may also be broken down into image regions by the division circuit 602, filtered with a second filter, and re-combined by the recombination circuit 606. The sizes of the image regions of the chroma component may be the same as or different from the sizes of the image regions of the luma component. In one embodiment, the chroma component is processed as an entire image, due to its having less complexity, while the luma component is divided and processed separately.

Embodiments of the present invention may be provided as hardware, software, and/or firmware. For example, the systems 100, 300, 600 may be implemented on an embedded device, such as an ASIC, FPGA, microcontroller, or other similar device, and included in a video or still camera. In other embodiments, elements of the systems 100, 300, 600 may be implemented in software and included on a desktop, notebook, netbook, or handheld computer. In these embodiments, a webcam, cellular-phone camera, or other similar device may capture images or video, and the systems 100, 300, 600 may remove low-light noise therefrom. The present invention may further be provided as one or more computer-readable programs embodied on or in one or more articles of manufacture. The article of manufacture may be any suitable hardware apparatus, such as, for example, a floppy disk, a hard disk, a CD ROM disk, DVD ROM disk, a Blu-Ray disk, a flash memory card, a PROM, a RAM, a ROM, or a magnetic tape. In general, the computer-readable programs may be implemented in any programming language. Some examples of languages that may be used include C, C++, or JAVA. The software programs may be further translated into machine language or virtual machine instructions and stored in a program file in that form. The program file may then be stored on or in one or more of the articles of manufacture.

Certain embodiments of the present invention were described above. It is, however, expressly noted that the present invention is not limited to those embodiments, but is determined by the scope of the appended claims.

**Claims**

1. A system (100) for removing noise from a low-light image, the system comprising:

   a luma filter circuit (104, 108) for selecting a first filter from a plurality of luma component filters (110, 112, 114) and applying the first filter to a luma component of a low-light image, thereby creating a filtered luma component;
   a chroma filter circuit (106) for applying a second filter to a chroma component of the low- light image, thereby creating a filtered chroma component; and
   a circuit for combining the filtered luma component and the filtered chroma component to thereby produce a filtered low-light image,
   wherein the plurality of luma component filters includes an edge-detection-based adaptive filter having a Gaussian distribution engine, the edge-detection-based adaptive filter being configured to identify a non-edge pixel and a neighbouring pixel region, and the Gaussian distribution engine being configured to: determine a mean and a variance of a Gaussian distribution of the neighbouring pixel region, determine a difference between the non-edge pixel and the mean, and compare the difference to the variance;
   wherein the edge-detection-based adaptive filter is configured to assign an output based on whether the comparison indicates that the non-edge pixel is a result of low-light noise;
   wherein the plurality of luma component filters includes a median filter, and wherein the edge-detection-based adaptive filter causes the median filter to determine a median value for the neighbouring pixel region and the median value is assigned as the output when the difference is greater than a first threshold multiplied by the variance;
   wherein the plurality of luma component filters includes a low-pass averaging filter, and wherein the edge-detection-based adaptive filter causes the low-pass averaging filter to determine a low-pass filter value for the neighbouring pixel region and the low-pass averaging filter value is assigned as the output when the difference is greater than a second threshold multiplied by the variance, the second threshold being less than or equal to the first threshold; and
   wherein the non-edge pixel is assigned as the output when the difference is greater than a third threshold multiplied by the variance, the third threshold being less than or equal to the second threshold.

2. The system (100) of claim 1, wherein the luma filter circuit (104, 108) selects and applies the first filter separately from the chroma filter circuit applying the second filter.

3. The system (100) of claims 1 or 2, wherein the selection of the first filter is based at least in part on a computational cost of each of the plurality of luma component filters.

4. The system (100) of any of claims 1 to 3, wherein the selection of the first filter is based at least in part on a complexity of the luma component.

5. The system (100) of any preceding claim, wherein the second filter is selected from the group consisting of a low-pass averaging filter and a temporal-averaging filter.

6. The system (100) of any preceding claim, wherein the image is one of a static image or a video frame.

7. The system (100) of any preceding claim, wherein the edge-detection-based adaptive filter has an edge-difference filter for dividing pixels in the luma component into edge and non-edge pixels and a dilation-based filter for expanding a region of edge pixels to include non-edge pixels.

8. A method for removing noise from a low-light image, the method comprising:

selecting a first filter from a plurality of luma component filters and applying the first filter to a luma component of a low-light image, thereby creating a filtered luma component;

applying a second filter to a chroma component of the low-light image, thereby creating a filtered chroma component; and

combining the filtered luma component and the filtered chroma component to thereby produce a filtered low-light image, and

wherein the plurality of luma component filters includes an edge-detection-based adaptive filter and wherein the step of selecting and applying the first filter includes selecting and applying the edge-detection-based adaptive filter, wherein the applying the edge-detection-based adaptive filter includes:

identifying a non-edge pixel and a neighbouring pixel region;
determining a mean and a variance of a Gaussian distribution of the neighbouring pixel region;
determining a difference between the non-edge pixel and the mean;
comparing the difference to the variance; and
assigning an output based on whether the comparison indicates that the non-edge pixel is a result of low-light noise;

wherein the steps of comparing and assigning, include:

determining a median value for the neighbouring pixel region; and
assigning the median value as the output when the difference is greater than a first threshold multiplied by the variance;

wherein the steps of comparing and assigning, further include:

determining a low-pass filter value for the neighbouring pixel region; and
assigning the low-pass filter value as the output when the difference is greater than a second threshold multiplied by the variance, the second threshold being less than or equal to the first threshold; and

wherein the steps of comparing and assigning, further include:

assigning the non-edge pixel as the output when the difference is greater than a third threshold multiplied by the variance, the third threshold being less than or equal to the second threshold.

9. The method of claim 8 wherein the selecting and the applying of the first filter is separate from the applying of the second filter.

10. The method of claims 8 or 9, wherein the selection of the first filter is based at least in part on a computational cost of each of the plurality of luma component filters.

11. The method of any of claims 8 to 10, wherein the selection of the first filter is based at least in part on a complexity of the luma component.

12. The method of any of claims 8 to 11, wherein the plurality of component filters includes a low-pass averaging filter, and a median filter.

13. The method of any of claims 8 to 12, wherein one or more of the following applies:

a) the second filter is selected from the group consisting of a low-pass averaging filter and a temporal-averaging filter;
b) the image is one of a static image or a video frame.

14. The method of any one of claims 8 to 13, wherein the edge-detection-based adaptive filter includes an edge-difference filter and a dilation-based filter, and the method further comprises:

dividing pixels in the luma component into edge and non-edge pixels using the edge-difference filter, and
expanding a region of edge pixels to include non-edge pixels using the dilation-based filter.

**Patentansprüche**

1. System (100) zum Entfernen von Rauschen aus einem Bild mit schwacher Belichtung, wobei das System umfasst:

   eine Luma-Filterschaltung (104, 108) zum Auswählen eines ersten Filters aus mehreren Lumakomponentenfiltern (110, 112, 114) und zum Anwenden des ersten Filters auf eine Lumakomponente eines Bildes mit schwacher Belichtung, wodurch eine gefilterte Lumakomponente erzeugt wird;
   eine Chroma-Filterschaltung (106) zum Anwenden eines zweiten Filters auf eine Chromakomponente des Bildes mit schwacher Belichtung, wodurch eine gefilterte Chromakomponente erzeugt wird; und
   eine Schaltung zum Kombinieren der gefilterten Lumakomponente und der gefilterten Chromakomponente, um dadurch ein gefiltertes Bild mit schwacher Belichtung zu erzeugen,
   wobei die mehreren Lumakomponentenfilter ein Kantendetektions-basiertes adaptives Filter mit einer Gauß-Verteilungs-Engine aufweist, wobei das Kantendetektions-basierte adaptive Filter konfiguriert ist, ein Nicht-Rand-Pixel und einen benachbarten Pixelbereich zu identifizieren, und die Gauß-Verteilungs-Engine konfiguriert ist zum: Bestimmen eines Mittelwerts und einer Varianz einer Gauß-Verteilung des benachbarten Pixelbereichs, Bestimmen einer Differenz zwischen dem Nicht-Rand-Pixel und dem Mittelwert, und Vergleichen der Differenz mit der Varianz;
   wobei das Kantendetektions-basierte adaptive Filter konfiguriert ist, eine Ausgabe basierend darauf zuzuweisen, ob der Vergleich anzeigt, dass das Nicht-Rand-Pixel ein Ergebnis von Niedriglicht-Rauschen ist;
   wobei die mehreren Lumakomponentenfilter ein Medianfilter aufweisen, und wobei das Kantendetektions-basierte adaptive Filter bewirkt, dass das Medianfilter einen Medianwert für den benachbarten Pixelbereich bestimmt, und der Medianwert als das Ausgangssignal zugewiesen wird, wenn die Differenz größer als ein erster Schwellenwert multipliziert mit der Varianz ist;
   wobei die mehreren Lumakomponentenfilter ein Tiefpass-Mittelungsfilter aufweisen, und wobei das Kantendetektions-basierte adaptive Filter bewirkt, dass das Tiefpass-Mittelungsfilter einen Tiefpass-Filterwert für den benachbarten Pixelbereich bestimmt, und der Tiefpass-Mittelungs-Filterwert als das Ausgangssignal zugewiesen wird, wenn die Differenz größer als ein zweiter Schwellenwert multipliziert mit der Varianz ist, wobei der zweite Schwellwert kleiner oder gleich dem ersten Schwellenwert ist; und
   wobei das Nicht-Rand-Pixel als Ausgangssignal zugewiesen wird, wenn die Differenz größer als ein dritter Schwellenwert multipliziert mit der Varianz ist, wobei der dritte Schwellenwert kleiner oder gleich dem zweiten Schwellenwert ist.

2. System (100) nach Anspruch 1, wobei die Luma-Filterschaltung (104, 108) das erste Filter getrennt von der Chroma-Filterschaltung, die das zweite Filter anwendet, auswählt und anwendet.

3. System (100) nach Anspruch 1 oder 2, wobei die Auswahl des ersten Filters mindestens teilweise auf einen Rechenaufwand jedes der mehreren Lumakomponentenfilter basiert.

4. System (100) nach einem der Ansprüche 1 bis 3, wobei die Auswahl des ersten Filters mindestens teilweise auf einer Komplexität der Lumakomponente basiert.

5. System (100) nach einem der vorhergehenden Ansprüche, wobei das zweite Filter aus der Gruppe ausgewählt ist, die aus einem Tiefpass-Mittelungsfilter und einem Zeitmittelungsfilter besteht.

6. System (100) nach einem der vorhergehenden Ansprüche, wobei das Bild eines von einem statischen Bild oder einem Videorahmen ist.

7. System (100) nach einem der vorhergehenden Ansprüche, wobei das Kantendetektions-basierte adaptive Filter ein Kantendifferenzfilter zum Einteilen von Pixeln in der Lumakomponente in Rand- und Nicht-Rand-Pixel und ein Dilatations-basiertes Filter zum Ausdehnen eines Bereichs von Randpixeln, um Nicht-Rand-Pixel aufzuweisen, hat.

8. Verfahren zum Entfernen von Rauschen aus einem Bild mit schwacher Belichtung, wobei das Verfahren umfasst:

   Auswählen eines ersten Filters aus mehreren Lumakomponentenfiltern und Anwenden des ersten Filters auf eine Lumakomponente eines Bildes mit schwacher Belichtung, wodurch eine gefilterte Lumakomponente erzeugt wird;
   Anwenden eines zweiten Filters auf eine Chromakomponente des Bildes mit schwacher Belichtung, wodurch eine gefilterte Chromakomponente erzeugt wird; und

Kombinieren der gefilterten Lumakomponente und der gefilterten Chromakomponente, um dadurch ein gefiltertes Bild mit schwacher Belichtung zu erzeugen, und

wobei die mehreren Lumakomponentenfilter ein Kantendetektions-basiertes adaptives Filter aufweisen und wobei der Schritt des Auswählens und Anwendens des ersten Filters das Auswählen und Anwenden des Kantendetektions-basierten adaptiven Filters aufweist, wobei das Anwenden des adaptiven Kantendetektions-basierten Filters aufweist:

Identifizieren eines Nicht-Rand-Pixels und eines benachbarten Pixelbereichs;
Bestimmen eines Mittelwerts und einer Varianz einer Gauß-Verteilung des benachbarten Pixelbereichs;
Bestimmen einer Differenz zwischen dem Nicht-Rand-Pixel und dem Mittelwert;
Vergleichen der Differenz mit der Varianz; und
Zuweisen einer Ausgabe basierend darauf, ob der Vergleich anzeigt, dass das Nicht-Rand-Pixel ein Ergebnis von Niedriglicht-Rauschen ist;

wobei die Schritte des Vergleichens und Zuweisens aufweisen:

Bestimmen eines Medianwertes für den benachbarten Pixelbereich; und
Zuweisen des Medianwertes als Ausgangssignal, wenn die Differenz größer ist als ein erster Schwellenwert multipliziert mit der Varianz ist;

wobei die Schritte des Vergleichens und Zuweisens ferner aufweisen:

Bestimmen eines Tiefpass-Filterwerts für den benachbarten Pixelbereich; und
Zuweisen des Tiefpass-Filterwerts als Ausgangssignal, wenn die Differenz größer als ein zweiter Schwellenwert multipliziert mit der Varianz ist, wobei der zweite Schwellenwert kleiner oder gleich dem ersten Schwellenwert ist; und

wobei die Schritte des Vergleichens und Zuweisens ferner aufweisen:

Zuweisen des Nicht-Rand-Pixels als Ausgangssignal, wenn die Differenz größer als ein dritter Schwellenwert multipliziert mit der Varianz ist, wobei der dritte Schwellenwert kleiner oder gleich dem zweiten Schwellenwert ist.

9. Verfahren nach Anspruch 8, wobei das Auswählen und Anwenden des ersten Filters von dem Anwenden des zweiten Filters getrennt ist.

10. Verfahren nach einem der Ansprüche 8 oder 9, wobei die Auswahl des ersten Filters mindestens teilweise auf einen Rechenaufwand jedes der mehreren Lumakomponentenfilter basiert.

11. Verfahren nach einem der Ansprüche 8 bis 10, wobei die Auswahl des ersten Filters mindestens teilweise auf einer Komplexität der Lumakomponente basiert.

12. Verfahren nach einem der Ansprüche 8 bis 11, wobei die mehrere Komponentenfilter einen Tiefpass-Mittelungsfilter und einen Medianfilter aufweisen.

13. Verfahren nach einem der Ansprüche 8 bis 12, wobei eines oder mehreres von dem Folgenden zutrifft:

a) das zweite Filter ist aus der Gruppe ausgewählt, die aus einem Tiefpass-Mittelungsfilter und einem Zeitmittelungsfilter besteht;
b) das Bild ist eines von einem statischen Bild oder einem Videorahmen.

14. Verfahren nach einem der Ansprüche 8 bis 13, wobei das Kantendetektions-basierte adaptive Filter ein Kantendifferenzfilter und ein Dilatations-basiertes Filter aufweist und das Verfahren ferner umfasst:

Einteilen von Pixeln in der Lumakomponente in Rand- und Nicht-Rand-Pixel unter Verwendung des Kantendifferenzfilters, und
Ausdehnen eines Bereichs von Randpixeln, um Nicht-Rand-Pixel aufzuweisen, unter Verwendung des Dilatations-basierten Filters.

**Revendications**

1. Système (100) pour supprimer le bruit d'une image à faible niveau de lumière, le système comprenant :

   un circuit de filtrage de luminance (104, 108) pour sélectionner un premier filtre parmi une pluralité de filtres de composantes de luminance (110, 112, 114) et appliquer le premier filtre à une composante de luminance d'une image à faible niveau de lumière, créant de ce fait une composante de luminance filtrée ;
   un circuit de filtrage de chrominance (106) pour appliquer un deuxième filtre à une composante de chrominance de l'image à faible niveau de lumière, créant de ce fait une composante de chrominance filtrée ; et
   un circuit pour combiner la composante de luminance filtrée et la composante de chrominance filtrée afin de produire ainsi une image à faible niveau de lumière filtrée,
   dans lequel la pluralité de filtres de composantes de luminance inclut un filtre adaptatif basé sur la détection de bord ayant un moteur à distribution gaussienne, le filtre adaptatif basé sur la détection de bord étant configuré pour identifier un pixel de non-bord et une région de pixel voisine, et le moteur à distribution gaussienne étant configuré pour : déterminer une moyenne et une variance d'une distribution gaussienne de la région de pixel voisine, déterminer une différence entre le pixel de non-bord et la moyenne, et comparer la différence à la variance ;
   dans lequel le filtre adaptatif basé sur la détection de bord est configuré pour attribuer une sortie selon que la comparaison indique que le pixel de non-bord est un résultat de bruit à faible niveau de lumière ;
   dans lequel la pluralité de filtres de composantes de luminance inclut un filtre médian, et dans lequel le filtre adaptatif basé sur la détection de bord amène le filtre médian à déterminer une valeur médiane pour la région de pixel voisine et la valeur médiane est attribuée en tant que sortie quand la différence est supérieure à un premier seuil multiplié par la variance ;
   dans lequel la pluralité de filtres de composantes de luminance inclut un filtre de moyenne passe-bas, et dans lequel le filtre adaptatif basé sur la détection de bord amène le filtre de moyenne passe-bas à déterminer une valeur de filtre passe-bas pour la région de pixel voisine et la valeur de filtre de moyenne passe-bas est attribuée en tant que sortie quand la différence est supérieure à un deuxième seuil multiplié par la variance, le deuxième seuil étant inférieur ou égal au premier seuil ; et
   dans lequel le pixel de non-bord est attribué en tant que sortie quand la différence est supérieure à un troisième seuil multiplié par la variance, le troisième seuil étant inférieur ou égal à un deuxième seuil.

2. Système (100) selon la revendication 1, dans lequel le circuit de filtrage de luminance (104, 108) sélectionne et applique le premier filtre séparément du circuit de filtrage de chrominance appliquant le deuxième filtre.

3. Système (100) selon la revendication 1 ou 2, dans lequel la sélection du premier filtre est basée, au moins en partie, sur un coût de calcul de chaque filtre de la pluralité de filtres de composantes de luminance.

4. Système (100) selon l'une quelconque des revendications 1 à 3, dans lequel la sélection du premier filtre est basée, au moins en partie, sur une complexité de la composante de luminance.

5. Système (100) selon une quelconque revendication précédente, dans lequel le deuxième filtre est sélectionné dans le groupe constitué d'un filtre de moyenne passe-bas et d'un filtre de moyenne temporelle.

6. Système (100) selon une quelconque revendication précédente, dans lequel l'image est l'une parmi une image fixe ou une trame vidéo.

7. Système (100) selon une quelconque revendication précédente, dans lequel le filtre adaptatif basé sur la détection de bord possède un filtre à différence de bord pour diviser les pixels de la composante de luminance en pixels de bord et en pixels de non-bord et un filtre basé sur la dilatation pour étendre une région de pixels de bord pour inclure des pixels de non-bord.

8. Procédé pour supprimer le bruit d'une image à faible niveau de lumière, le procédé comprenant :

   la sélection d'un premier filtre parmi une pluralité de filtres de composantes de luminance et l'application du premier filtre à une composante de luminance d'une image à faible niveau de lumière, créant de ce fait une composante de luminance filtrée ;
   l'application d'un deuxième filtre à une composante de chrominance de l'image à faible niveau de lumière, créant de ce fait une composante de chrominance filtrée ; et

la combinaison de la composante de luminance filtrée et de la composante de chrominance filtrée afin de produire ainsi une image à faible niveau de lumière filtrée, et

dans lequel la pluralité de filtres de composantes de luminance inclut un filtre adaptatif basé sur la détection de bord et dans lequel l'étape de sélection et d'application du premier filtre inclut la sélection et l'application du filtre adaptatif basé sur la détection de bord, dans lequel l'application du filtre adaptatif basé sur la détection de bord inclut :

l'identification d'un pixel de non-bord et d'une région de pixel voisine ;
la détermination d'une moyenne et d'une variance d'une distribution gaussienne de la région de pixel voisine ;
la détermination d'une différence entre le pixel de non-bord et la moyenne ;
la comparaison de la différence à la variance ; et
l'attribution d'une sortie selon que la comparaison indique que le pixel de non-bord est un résultat de bruit à faible niveau de lumière ;

dans lequel les étapes de comparaison et d'attribution incluent :

la détermination d'une valeur médiane pour la région de pixel voisine ; et
l'attribution de la valeur médiane en tant que sortie quand la différence est supérieure à un premier seuil multiplié par la variance ;

dans lequel les étapes de comparaison et d'attribution incluent en outre :

la détermination d'une valeur de filtre passe-bas pour la région de pixel voisine ; et
l'attribution de la valeur de filtre passe-bas en tant que sortie quand la différence est supérieure à un deuxième seuil multiplié par la variance, le deuxième seuil étant inférieur ou égal au premier seuil ; et

dans lequel les étapes de comparaison et d'attribution incluent en outre :

l'attribution du pixel de non-bord en tant que sortie quand la différence est supérieure à un troisième seuil multiplié par la variance, le troisième seuil étant inférieur ou égale au deuxième seuil.

9.  Procédé selon la revendication 8 dans lequel la sélection et l'application du premier filtre sont séparées de l'application du deuxième filtre.

10. Procédé selon la revendication 8 ou 9, dans lequel la sélection du premier filtre est basée, au moins en partie, sur un coût de calcul de chaque filtre de la pluralité de filtres de composantes de luminance.

11. Procédé selon l'une quelconque des revendications 8 à 10, dans lequel la sélection du premier filtre est basée, au moins en partie, sur une complexité de la composante de luminance.

12. Procédé selon l'une quelconque des revendications 8 à 11, dans lequel la pluralité de filtres de composantes inclut un filtre de moyenne passe-bas et un filtre médian.

13. Procédé selon l'une quelconque des revendications 8 à 12, dans lequel une ou plusieurs des caractéristiques suivantes s'appliquent :

a) le deuxième filtre est sélectionné dans le groupe constitué d'un filtre de moyenne passe-bas et d'un filtre de moyenne temporelle ;
b) l'image est l'une parmi une image fixe ou une trame vidéo.

14. Procédé selon l'une quelconque des revendications 8 à 13, dans lequel le filtre adaptatif basé sur la détection de bord inclut un filtre à différence de bord et un filtre basé sur la dilatation, et le procédé comprend en outre :

la division de pixels de la composante de luminance en pixels de bord et en pixels de non-bord en utilisant le filtre à différence de bord, et
l'extension d'une région de pixels de bord pour inclure des pixels de non-bord en utilisant le filtre basé sur la dilatation.

100

108

LOW-PASS AVERAGING FILTER

110

108

MEDIAN /
RANK MEDIAN

112

Y    104

108

EDGE- AND/OR GAUSSIAN-
DISTRIBUTION-BASED ADAPTIVE
FILTER

114

102

LOW-PASS AVERAGING FILTER
AND/OR TEMPORAL-AVERAGING
FILTER WITH SAD

116

UV    106

FIG. 1

200

APPLY A FIRST FILTER TO A LUMA
COMPONENT OF A LOW-LIGHT
IMAGE

202

APPLY A SECOND FILTER TO A
CHROMA COMPONENT OF THE
LOW-LIGHT IMAGE

204

COMBINE THE FILTERED LUMA
COMPONENT AND THE FILTERED
CHROMA COMPONENT TO PRODUCE
A FILTERED LOW-LIGHT IMAGE
206

FIG. 2

300

EDGE-DIFFERENCE
FILTER
302

DILATION-BASED
FILTER
304

GAUSSIAN
DISTRIBUTION
ENGINE
306

MEDIAN
BLOCK
308

LOW-PASS
FILTER
310

PIXEL
312

OUTPUT
314

FIG. 3

FIG. 4

500

DILATE AN EDGE DETECTED
IN AN IMAGE
502

COMPARE A PIXEL IN A NON-
EDGE REGION TO A REGION
SURROUNDING THE PIXEL
504

OPTIONALLY REPLACE THE
PIXEL BASED ON A RESULT OF
THE COMPARISON
506

FIG. 5

600

DIVISION CIRCUIT
602

FILTER CIRCUIT
604

RECOMBINATION
CIRCUIT
606

FIG. 6

700

DIVIDE AN IMAGE INTO A
PLURALITY OF REGIONS
702

APPLY A FIRST FILTER TO
LUMA COMPONENTS OF EACH
OF THE REGIONS
704

COMBINE THE FILTERED
REGIONS INTO A FILTERED
IMAGE
706

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 95066410 A
- US 95066610 A
- US 95067110 A
- US 20090278961 A1